(19) Europäisches Patentamt
European Patent Office
Office européen des brevets

(11) **EP 3 014 313 B1**

(12) **EUROPÄISCHE PATENTSCHRIFT**

(45) Veröffentlichungstag und Bekanntmachung des Hinweises auf die Patenterteilung:
**07.04.2021   Patentblatt 2021/14**

(21) Anmeldenummer: **14731959.4**

(22) Anmeldetag: **20.06.2014**

(51) Int Cl.:
***G01V 8/20*** *(2006.01)*

(86) Internationale Anmeldenummer:
**PCT/EP2014/063037**

(87) Internationale Veröffentlichungsnummer:
**WO 2014/206886 (31.12.2014 Gazette 2014/53)**

(54) **VERFAHREN ZUR SYNCHRONISATION EINES LICHTGITTERS**

METHOD FOR SYNCHRONIZING A LIGHT GRID

PROCÉDÉ DE SYNCHRONISATION D'UNE BARRIÈRE LUMINEUSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.06.2013   DE 102013106785**

(43) Veröffentlichungstag der Anmeldung:
**04.05.2016   Patentblatt 2016/18**

(73) Patentinhaber: **Pilz Auslandsbeteiligungen GmbH 73760 Ostfildern (DE)**

(72) Erfinder:
• **TELLKAMP, Friedjof**
  **CH-7310 Bad Ragaz (CH)**
• **MAFFIOLI, Massimo**
  **CH-7310 Bad Ragaz (CH)**
• **WERNER, Christoph**
  **CH-7310 Bad Ragaz (CH)**
• **BRAUN, Gerhard**
  **CH-7310 Bad Ragaz (CH)**

(74) Vertreter: **Witte, Weller & Partner Patentanwälte mbB
Postfach 10 54 62
70047 Stuttgart (DE)**

(56) Entgegenhaltungen:
**EP-A1- 1 933 173        EP-A2- 1 790 999
DE-A1-102007 059 565**

EP 3 014 313 B1

**Beschreibung**

Die vorliegende Erfindung betrifft ein Verfahren zur Synchronisation eines Lichtgitters sowie ein auf diesem Verfahren beruhendes Lichtgitter.

Die Erfindung betrifft ganz allgemein das Gebiet der Sicherheitstechnik im Sinne von Schutz von Personen und/oder materiellen Werten vor Gefahren, die von automatisiert arbeitenden Anlagen oder Maschinen ausgehen, wie z.B. von automatisiert arbeitenden Robotern. Eine typische Schutzmaßnahme besteht darin, den Gefahrenbereich einer solchen Anlage abzusperren, so dass ein Betreten des Gefahrenbereichs entweder verhindert wird oder zum Anhalten, zum Abschalten oder anderweitigen Entschärfen der gefährlichen Betriebssituation führt. Zum Absperren eines solchen Gefahrenbereichs werden häufig mechanische Schutzzäune oder Schutztüren verwendet. In vielen Fällen ist jedoch ein Zugang in den abgesicherten Gefahrenbereich notwendig, sei es weil eine Bedienperson regelmäßig Zugang zu der Maschine benötigt und/oder weil Material in den oder aus dem Gefahrenbereich transportiert werden muss. Für solche Fälle werden häufig optoelektronische Schutzeinrichtungen eingesetzt, insbesondere Lichtgitter bzw. Lichtvorhänge.

Lichtgitter weisen eine Sendeeinheit mit einer Vielzahl von einzelnen Sendern auf, die Sendestrahlen zu einer beabstandeten Empfangseinheit senden. Die Empfangseinheit weist eine Vielzahl von Empfängern auf, wobei jeweils einem Sender der Sendeeinheit ein Empfänger in der Empfangseinheit zugeordnet ist, die zusammen ein Sender/Empfängerpaar bilden. Die üblicherweise zueinander parallel verlaufenden Sendestrahlen zwischen den Sendern und den Empfängern spannen dabei ein Schutzfeld auf, welches den zu überwachenden Bereich darstellt. Wird einer der Sendestrahlen, beispielsweise von einem Körperteil einer Person unterbrochen, kann diese Unterbrechung mit Hilfe der Empfänger erkannt werden und die zusichernde Anlage kann angehalten oder abgeschaltet werden.

Typischerweise werden die Lichtgitter in einem scannenden Betrieb verwendet, d.h., die einzelnen Sender/Empfängerpaaren werden zyklisch nacheinander in einer Scanrichtung aktiviert, so dass nur ein Sender/Empfängerpaar zu einem Zeitpunkt aktiv ist. Voraussetzung für den scannenden Betrieb ist, dass die Sender- und Empfängersteuereinheiten in der Sende- und Empfangseinheit zeitlich miteinander synchronisiert werden können, damit jeweils der zugehörige Empfänger zu einem Sender zeitsynchron aktiviert werden kann. Da die Sende- und Empfangseinheit jedoch voneinander beanstandete sind, fehlt in der Regel eine elektrische Kopplung, beispielsweise per Kabel oder Funk, zwischen den beiden Einheiten. Die Synchronisation erfolgt in diesen Fällen auf optischem Wege über die Sendestrahlen.

Die DE 195 10 304 C1 zeigt ein derartiges Lichtgitter bei dem die Synchronisation auf optischem Wege erfolgt, wobei ein einzelnes Sender/Empfängerpaar für die zeitliche Synchronisation der übrigen Sender/Empfängerpaare herangezogen wird. Der Sender dieses Sender/Empfängerpaares sendet einen von den anderen Sendestrahlen verschiedenen Synchronisationsstrahl aus. Der zugehörige Empfänger ist fortlaufend aktiviert. Empfängt der Empfänger den Synchronisationsstrahl, beginnt ausgehend von diesem Empfänger die zyklische Aktivierung der folgenden Empfänger. Das Lichtgitter kann somit nach jedem Durchlauf des Scanzyklus neu synchronisiert werden.

In vielen Anwendungsfällen ist das Schutzfeld eines Lichtgitters größer ausgedehnt als der eigentlich zu überwachende Bereich. Beispielsweise können feststehend Maschineteile ins Schutzfeld ragen, die jedoch nicht zum Auslösen der Sicherheitsfunktion führen sollen. Ebenso können der zu überwachenden Maschine nicht sicherheitskritische Objekte, beispielsweise Werkstücke, zugeführt werden, die ebenfalls nicht zum Abschalten der Anlage führen sollen. Um das Schutzfeld an die sicherheitskritischen Bereiche anzupassen, werden Teilbereiche des Schutzfelds häufig als sogenannte Blanking- oder Mutingbereiche definiert, in denen eine Objekterkennung nicht zum Auslösen der Sicherheitsfunktion führen soll. Mit anderen Worten werden in Teilbereichen einzelne Sender- und Empfängerpaare gezielt ausgeblendet, und zwar entweder dauerhaft (Blanking) oder nur für kurze Zeiträume (Muting).

Um ein Lichtgitter flexibel einsetzen zu können und da in der Regel vor dem Einbau des Lichtgitters nicht bekannt ist, welche Bereiche als Blankingbereiche zu definieren sind, ist es wünschenswerte, dass das Lichtgitter so ausgebildet ist, dass alle Sender/Empfängerpaare für das Blanking geeignet sind. Gleichzeitig soll jedoch auch eine optische Synchronisation weiterhin möglich sein. Beim Lichtgitter gemäß der DE 195 10 304 C1 ist ein zuvor festgelegtes Sender/Empfängerpaar für die Synchronisation herangezogen. Wird dieses Sender/Empfängerpaar aufgrund von Blanking ausgeblendet, ist eine Synchronisation nicht möglich.

Die DE 10 2005 047 776 B4 beschreibt ein Verfahren, bei dem die optische Synchronisation nicht anhand eines vorher bereits festgelegten Sender/Empfängerpaares erfolgt, sondern mit einem beliebigen Sender/Empfängerpaar durchgeführt werden kann. Hierzu wird den einzelnen Sender/Empfängerpaaren jeweils eine eindeutige Kennung aufgeprägt, wobei diese Kennung eine eindeutige Zuordnung des Sender/Empfängerpaares aus der Gesamtheit der Sender/Empfängerpaare ermöglicht. Wird von einem Empfänger ein Sendestrahl mit einer zugehörigen Kennung erkannt, kann aufgrund der eindeutigen Zuordnung eine Synchronisation erfolgen. Diese eindeutige Zuordnung setzt jedoch voraus, dass sich die Sendestrahlen jeweils voneinander unterscheiden und bedarf daher einer Vielzahl von unterschiedlichen Kennungen für die einzelnen Sender/Empfängerpaare. Dies erfordert jedoch, dass entweder die Sender/Empfängerpaare unterschiedlich ausgelegt sind oder aber dass die Steuereinheiten in der Sende- und Empfangseinheit entsprechend komplex ausgebildet sind. Beide Variante führen zu erhöhten Herstellungskosten des Lichtgitters.

Die DE 10 2007 059 565 B4 beschreibt ein weiteres Verfahren, bei dem das Sender/Empfängerpaar, welches zur Synchronisation herangezogen wird, nicht fest vorgegeben ist. Die Synchronisation erfolgt dabei anhand eines kodierten Sendestrahls, nutzt jedoch die Tatsache, dass nicht eine absolute Zuordnung des Sendestrahls zu einem Sender/Empfängerpaar nötig ist, sondern bereits eine relative Zuordnung für die Synchronisation ausreichend ist, d.h., dass bei Erkennen des kodierten Sendestrahls an einem Empfänger aufgrund der sequentiellen Ansteuerung mit der zyklischen Aktivierung mit dem folgenden Empfänger begonnen werden kann. Damit der kodierte Sendestrahl unterschiedlichen Sender/Empfängerpaaren aufgeprägt wird, verfügt die Steuereinheit in der Sendeeinheit über einen Algorithmus, der den kodierten Sendestrahl zeitlich variierend über verschiedene Sender/Empfängerpaare aussendet. Da der kodierte Sendestrahl immer wieder verschiedenen Sender/Empfängerpaaren aufgeprägt ist, verhindert auch das Blanking einzelner Strahlen nicht, dass eine Synchronisation stattfindet. Im ungünstigsten Fall werden lediglich mehrere Zyklen für die Synchronisation benötigt. Im Gegensatz zu den zuvor genannten Verfahren wird, bei diesen Verfahren eine einzige von den anderen abweichende Kennung benötigt. Nachteilig ist, dass nur eine relative Zuordnung des kodierten Sendestrahls zu einem Sender/Empfängerpaar erfolgen kann.

EP 1 790 999 B1 offenbart ein weiteres Verfahren zur Lichtgittersynchronisation, bei dem durch definierte Pausen beim Aussenden von Sendestrahlen während der Aktivierung (sog. Synchronisationspausen) einzelnen Sendestrahlen als Synchronisationssendestrahlen hervorgehoben werden. Die einzelnen Sendestrahlen sind bei diesem Verfahren gleich, jedoch der Zeitpunkt des Aussendens kann variieren.

Vor diesem Hintergrund ist es eine Aufgabe der vorliegenden Erfindung ein alternatives Verfahren zur Synchronisation von Lichtgittern anzugeben, mit dem ein Lichtgitter auf einfachere Weise, kostengünstig und anhand einer absoluten Zuordnung synchronisiert werden kann.

Gemäß einem Aspekt der vorliegenden Erfindung wird diese Aufgabe durch ein Verfahren zur Synchronisation eines Lichtgitters gemäß Anspruch 1 gelöst.

Gemäß einem weiteren Aspekt wird diese Aufgabe durch ein entsprechendes Lichtgitter gemäß Anspruch 6 gelöst.

Dem neuen Verfahren und dem darauf basierenden Lichtgitter liegt somit die Idee zugrunde, die zeitliche Synchronisation der Sende- und Empfangseinheit anhand von zwei Synchronisationssendestrahlen durchzuführen, wobei sich die Synchronisationsstrahlen durch das Aufprägen einer Kennung von den anderen Sendestrahlen unterscheiden. Zur Synchronisation sind somit nur zwei verschiedene Arten an Sendestrahlen notwendig. Zum einen sind dies "normale" Sendestrahlen, also Sendestrahlen mit oder ohne eine Kennung und zum anderen Synchronisationssendestrahlen mit einer Kennung, die von den übrigen Sendestrahlen abweicht.

Die Synchronisation erfolgt anhand der Auswertung der zeitlichen Differenz zwischen dem Empfangen des ersten und des mindestens zweiten Synchronisationssendestrahls. Dazu sind zunächst alle Empfänger aktiv und "horchen" auf das Eintreffen eines Synchronisationssendestrahls. Die Empfängersteuereinheit registriert die Zeitpunkte des Eintreffens der beiden Synchronisationssendestrahlen und bildet daraus die zeitliche Differenz. Anhand der zeitlichen Differenz, also dem zeitlichen Abstand, mit dem die Synchronisationssendestrahlen empfangen werden, ist vorteilhaft eine eindeutige Zuordnung der Synchronisationssendestrahlen innerhalb der Gesamtheit der Sendestrahlen möglich.

Da nur zwei verschiedenartige Sendestrahlen zur Synchronisation benötigt werden, ist ein Lichtgitter für das neue Verfahren kostengünstig zu realisieren. Vorzugsweise kann das Aufprägen der Kennung auf die Sendestrahlen und die empfangsseitige Demodulation in Form von Softwaremodulen für die Sender- und/oder Empfängersteuereinheit ermöglicht werden. Eine andere Möglichkeit besteht darin die Kennung über Polarisation oder andere Lichtfrequenz aufzuprägen.

Zur Synchronisation können weiterhin unterschiedliche Sender/Empfängerpaare herangezogen werden, da lediglich der zeitliche Abstand zwischen zwei beliebigen Synchronisationssendestrahlen zur Zuordnung herangezogen wird. Ist ein Sender/Empfängerpaar, welches zur Synchronisation verwendet wird, beispielsweise aufgrund von Blanking ausgeblendet, kann der Synchronisationssendestrahl eines anderen Sender/Empfängerpaares zur Synchronisation herangezogen werden. Voraussetzung ist lediglich, dass in einem Zyklus mindestens zwei Synchronisationssendestrahlen empfangen werden. Die Verfügbarkeit des Lichtgitters wird dadurch erhöht.

Eine definierte Sequenz, die der Sendersteuereinheit und der Empfängersteuereinheit bekannt ist, macht es besonders einfach, eine Zuordnung anhand des zeitlichen Abstandes zu ermitteln. Da es für einen Sendestrahl nur zwei mögliche Zustände gibt, ist die Sequenz als einfache binäre Folge gebildet und kann daher besonders gut verarbeitet werden.

Vorteilhaft wird nur eine Kennung benötigt, um Sendestrahlen von Synchronisationssendestrahlen zu unterscheiden. Dies ermöglicht eine besonders günstige Realisierung des Lichtgitters. Die Kennung kann dabei so deutlich ausfallen, dass eine Verwechselung von Synchronisationssendestrahlen und normalen Sendestrahlen ausgeschlossen ist.

Schließlich kann mittels des neuen Verfahrens nicht nur die Relativlage der Synchronisationssendestrahlen zu den andern Sendestrahlen bestimmt werden, sondern auch die absolute Lage der Synchronisationssendestrahlen zu den anderen Sendestrahlen in einem Zyklus T. Diese zusätzliche Information kann vorteilhaft für eine bessere Abstimmung zwischen der Sendeeinheit und der Empfangseinheit verwendet werden.

Die oben genannte Aufgabe ist damit vollständig gelöst.

Gemäß einer weiteren Ausgestaltung wird die Anzahl M an Synchronisationssendestrahlen so gewählt, dass bei einer Anzahl N an Sendern keine größer Anzahl M an Synchronisationssendestrahlen gefunden werden kann, an den der paarweise zeitliche Abstand zwischen den Synchronisationssendestrahlen eindeutig ist.

Gemäß dieser Ausgestaltung wird das optimal Verhältnis an Synchronisationssendestrahlen zu "normalen" Sendestrahlen verwendet, um eine höchstmögliche Verfügbarkeit zu erreichen. Je mehr Synchronisationssendestrahlen in einem Zyklus auftreten umso höher ist die Wahrscheinlichkeit, dass zumindest zwei Strahlen nicht vom Blanking betroffen sind. Die Zuweisung erfolgt vorzugsweise anhand eines optimalen Golombmaßstabs, ein Maßstab beidem ein Abstand zwischen zwei Maßstabwerten genau nur einmal vorkommt, wobei die Gesamtlänge des Maßstabs so gering wie möglich gehalten wird.

Gemäß einer weiteren Ausgestaltung vergleicht die Empfängereinheit die gemessenen zeitlichen Abstände mit Sollwerten und versetzt in Abhängigkeit davon das Lichtgitter in einen Objekterkennungsbetrieb.

Gemäß dieser Ausgestaltung wird der Objekterkennungsbetrieb nur gestartet, wenn der zeitliche Abstand zwischen den Synchronisationssendestrahlen einem definierten Sollwert entspricht. Auf diese Weise wird eine falsche Synchronisation beispielsweise durch einen fehlerhaften Empfänger verhindert. Insgesamt erhöht diese Ausgestaltung die Zuverlässigkeit des Lichtgitters.

Gemäß einer weiteren Ausgestaltung beginnt der Objekterkennungsbetrieb mit dem Sendestrahl, der auf den zweiten Synchronisationssendestrahl im Zyklus T folgt.

Gemäß dieser Ausgestaltung beginnt der Objekterkennungsbetrieb unmittelbar, nachdem ein zweiter Synchronisationssendestrahl von der Empfängersteuereinheit registriert wird. Die Objekterkennung wird somit noch im gleichen Zyklus gestartet, in dem die Synchronisation stattfindet.

Es versteht sich, dass die vorstehend genannten und die nachstehend noch zu erläuternden Merkmale nicht nur in der jeweils angegebenen Kombination verwendbar sind. Der Gegenstand des Schutzbegehrens ist in den Patentansprüchen angegeben.

Ausführungsbeispiele der Erfindung sind in der Zeichnung dargestellt und werden in der nachfolgenden Beschreibung näher erläutert. Es zeigen:

Fig. 1    eine Anordnung zum Absichern einer technischen Anlage mit einem Lichtgitter,

Fig. 2    eine schematische Darstellung eines Lichtgitters,

Fig. 3    eine Sendeeinheit eines Lichtgitters für die Verwendung des erfindungsgemäßen Verfahrens,

Fig. 4    eine tabellarische Übersicht für die optimale Positionierung von Synchronisationssendestrahlen innerhalb eines Zyklus,

Fig. 5    eine schematische Darstellung zur Kodierung zweier Lichtgitter.

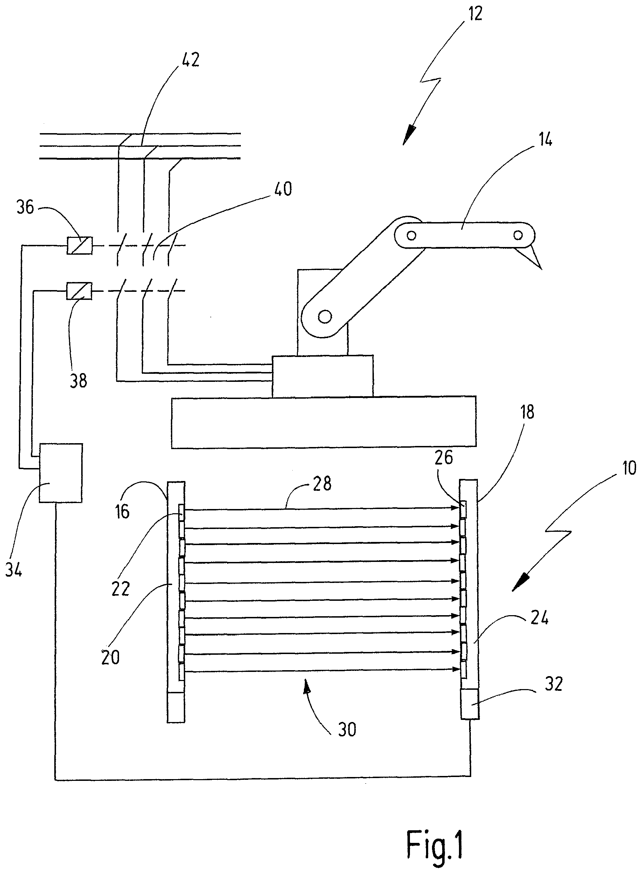

Fig. 1 zeigt exemplarisch eine Vorrichtung mit einem Ausführungsbeispiel des neuen Lichtgitters 10 zum Absichern einer technischen Anlage 12. Die technische Anlage 12 ist hier ein automatisiert arbeitender Roboter 14, dessen Bewegungsbereich einen Gefahrenbereich für Personen darstellt. Das Lichtgitter 10 soll ein unbefugtes Eindringen in den Gefahrenbereich erkennen und die technische Anlage 12 in einen gefahrlosen Zustand überführen und insbesondere abschalten.

Das Lichtgitter 10 weist hierzu zwei Komponenten 16, 18 auf, die in einem Abstand zueinander angeordnet sind. Die erste Komponente 16 ist eine Sendeeinheit 20, die eine Vielzahl von einzelnen Sendern 22 aufweist. Die zweite Komponente 18 ist eine Empfangseinheit 24 mit einer Vielzahl von einzelnen Empfängern 26. Die beiden Komponenten 16, 18 weisen je ein Gehäuse auf und sind im Bereich der Anlage 12 fest installiert, vorzugsweise an den Grenzen des zu überwachenden Gefahrenbereichs.

Je einem Sender 22 der Sendeeinheit 20 ist ein Empfänger 26 in der Empfangseinheit 24 zugeordnet, die zusammen ein Sender/Empfängerpaar 22, 26 bilden. Die Sender 22 sind vorzugsweise in äquidistanten Abständen nebeneinander an der ersten Komponente 16 angeordnet. Die Empfänger 26 sind vorzugsweise auf gleicher Weise in äquidistanten Abständen nebeneinander an der zweiten Komponente 18 angeordnet. Der Sender 22 jedes Sender/Empfängerpaars 22, 26 ist dazu ausgebildet, einen gerichteten Sendestrahl 28 entlang einer Strahlachse zum zugehörigen Empfänger 26 zu senden. Die Gesamtheit der vorzugsweise parallel zueinander verlaufenden Strahlenachsen 28 definiert dabei ein Schutzfeld 30 des Lichtgitters 10.

Die Überwachung des Schutzfeldes 30 bzw. die Objekterkennung erfolgt hier wie bei einem Scanner. Die Sender/Empfängerpaare 22, 26 werden nacheinander aktiviert, wobei der Sender 22 einen Sendestrahl 28 zum zugehörigen Empfänger 26 sendet. Die Aktivierung erfolgt in einem vordefinierten Takt, vorzugsweise in der Reihenfolge, in der die einzelnen Sender 22 nebeneinander an der ersten Komponente angeordnet sind. Innerhalb eines Zyklus T wird jedes Sender/Empfängerpaar 22, 26 einmal aktiviert, so dass das Schutzfeld 30 einmal vollständig abgetastet wird.

Der Sender 22 ist vorzugsweise eine Leuchtdiode mit einer vorgelagerten Optik, die einen Sendestrahl 28, beispielsweise in Form von Lichtimpulsen, aussenden kann. Der Empfänger 26 ist vorzugsweise eine entsprechende Photodiode mit einer Empfangsoptik, die einen auf sie gerichteten Sendestrahl 28 detektieren kann.

Bei einem freien Strahlengang zwischen Sender und Empfänger eines Sender/Empfängerpaars 22, 26 wird vom Empfänger 26 der vom Sender 22 ausgesendete Sendestrahl 28 erkannt. Befindet sich jedoch ein Objekt im Strahlengang, wird der Sendestrahl 28 unterbrochen oder abgelenkt und der Sendestrahl 28 wird nicht vom Empfänger 26 detektiert.

Eine Empfängersteuereinheit 32 in der Empfangseinheit 24 ist mit den einzelnen Empfängern 26 verbunden und registriert das Eintreffen oder das Ausbleiben eines oder mehrerer Sendestrahlen 28 und generiert in Abhängigkeit davon ein binäres Objekterkennungssignal mit zwei Zuständen. Der erste Zustand signalisiert, dass sich kein Objekt im Schutzfeld befindet. Der zweite Zustand signalisiert das Vorhandensein eines Objekts (hier nicht dargestellt) oder einen Fehler, der aus Sicherheitsgründen ebenfalls zu einer Abschaltung der Anlage 12 führen soll.

Die Empfängersteuereinheit 32 ist hier mit einer übergeordneten Steuereinheit 34 verbunden, die in Abhängigkeit des Objekterkennungssignals ein zweikanaliges, redundantes Freigabesignal erzeugt, das hier zum Ansteuern von zwei Schützen 36, 38 verwendet wird. Die Schütze 36, 38 haben Arbeitskontakte 40, die nur bei Vorliegen des Freigabesignals geschlossen sind. Die Arbeitskontakte 40 sind zwischen einer Betriebsspannung 42 und den Antrieben des Roboters 14 angeordnet, so dass hier beim Detektieren eines Objekts im Schutzfeld 30 des Lichtgitters 10 der Roboter 14 von der Betriebsspannung 42 getrennt und somit gestoppt wird.

Wie der Fig. 1 zu entnehmen ist, sind die Sendeeinheit 20 und die Empfangseinheit 24 hier weder mechanisch noch elektrisch über eine Leitung miteinander verbunden. Für den scannenden Betrieb ist jedoch eine zeitliche Synchronisation zwischen der Empfängersteuereinheit 32, die die Empfänger 26 zyklisch abfragt, und einer Sendersteuereinheit 44 in der Sendeeinheit, die die einzelnen Sender 22 zyklisch aktiviert, notwendig.

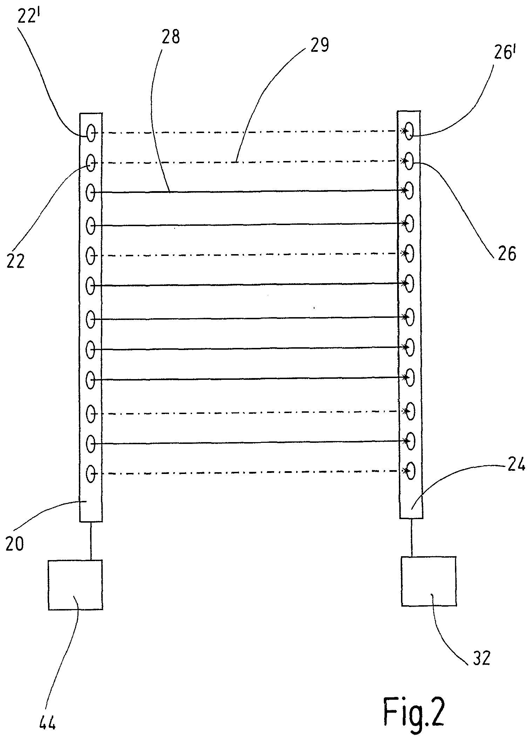

Eine vorteilhafte Möglichkeit der Synchronisierung beschreibt das neue Verfahren, welches anhand Fig. 2 im Folgenden näher erläutert wird.

Fig. 2 zeigt das Lichtgitter 10 gemäß dem Ausführungsbeispiel der Fig. 1. Das Lichtgitter 10 weist hier zwölf Sender/Empfängerpaare 22, 26 auf, deren zugehörige Sendestrahlen 28 durch Pfeile angedeutet sind. Zur Verdeutlichung sind alle Sendestrahlen 28 dargestellt, wobei hier zu einem Zeitpunkt immer nur ein Sender/Empfängerpaar 22, 26 aktiv sein kann. Die Aktivierung der Sender 22 erfolgt durch die Sendersteuereinheit 44, die hier getrennt von der Sendeeinheit 20 dargestellt ist. In einem anderen Ausführungsbeispiel kann diese auch in der Sendeeinheit 20 integriert sein. Die Empfangseinheit 24 weist eine separate Empfängersteuereinheit 32 auf, die keine elektrische Verbindung zur Sendersteuereinheit 44 hat.

Die zeitliche Synchronisation erfolgt nach dem neuen Verfahren auf optischem Wege über die Sendestrahlen 28. Die Objekterkennung ist dabei zunächst deaktiviert. Wie bei der Objekterkennung aktiviert die Sendersteuereinheit 44 nacheinander in der Reihenfolge ihrer Anordnung die einzelnen Sender 22, die daraufhin einen Sendestrahl 28 zum zugehörigen Empfänger 26 senden. Die Aktivierung erfolgt in einem festen Takt mit gleichmäßigem Intervallabstand zwischen jeweils benachbarten Sendern 22. Gemäß einer noch näher zu erläuternden Sequenz wird in definierten zeitlichen Abständen den einzelnen Sendestrahlen 28 eine Kennung A aufgeprägt, so dass in einem Zyklus T eine definierte Sequenz an Sendestrahlen 28 mit oder ohne der Kennung A ausgesandt wird.

Die Kennung A kann beispielsweise durch eine definierte Pulsfolge, Doppelpulse, eine Pulsweitenmodulation oder Amplitudenmodulation dem Sendestrahl 28 aufgeprägt werden. Die Modulation erfolgt dabei vorzugsweise durch die Sendersteuereinheit 44. Alternativ können bestimmte Sender 22 auch so ausgebildet sein, dass sie einem Sendestrahl 28 immer die Kennung A aufprägen. In diesem Fall wird der definierte zeitliche Abstand, der zwischen dem Aussenden der Sendestrahlen mit der Kennung A benötigt wird, um die Sequenz zu bilden, durch die entsprechende Anordnung der Sender 22 in der Reihenfolge der Sender 22 definiert.

In der Fig. 2 sind die Sendestrahlen 28, die mit einer Kennung A belegt sind, durch gestrichelte Pfeile dargestellt. Sendestrahlen, denen eine Kennung A aufgeprägt ist, werden im Folgenden als Synchronisationssendestrahl 29 bezeichnet. Geht man davon aus, dass die Aktivierung am ersten Sender 22' beginnt und in Scanrichtung R fortschreitet, ergibt sich für das hier dargestellte Ausführungsbeispiel eine Sequenz über den Zyklus T von AABBABBBBBABA, wobei A für einen Sendestrahl mit aufgeprägter Kennung A steht und B für einen Sendestrahl ohne Kennung oder einer Kennung B, die von der Kennung A verschieden ist.

Bei der Empfangseinheit 24 sind zunächst alle Empfänger 26 aktiv, d.h., die Empfängersteuereinheit 32 "horcht" an allen Empfängern 26, ob ein Sendestrahl 28 registriert wird. Insbesondere horcht sie auf Synchronisationssendestrahlen 29, also Sendestrahlen 28 mit einer Kennung A. Zum Detektieren von Synchronisationssendestrahlen 29 ist die Empfängersteuereinheit 32 so ausgebildet, dass sie die Kennung von einem Sendelichtstahl demodulieren kann. Alternativ kann ein Sender/Empfängerpaar 22, 26 auch so ausgebildet sein, dass der Sender 22 immer nur einen Sendestrahl mit einer Kennung A aussendet und der Empfänger den Sendestrahl 28 nur detektieren kann, wenn dieser die Kennung A trägt.

Registriert die Empfängersteuereinheit an einem Empfänger 26 einen Synchronisationssendestrahl 29, wird dieser Zeitpunkt von der Empfängersteuereinheit 32 gespeichert oder alternativ ein Timer gestartet. Registriert die Empfängersteuereinheit 32 an einem anderen Empfänger einen zweiten Synchronisationssendestrahl 29, wird auch dieser Zeitpunkt festgehalten bzw. der Timer gestoppt. Aus der zeitlichen Differenz zwischen dem Eintreffen des ersten und des zweiten Synchronisationssendestrahlen 29 kann die Empfängersteuereinheit exakt bestimmen, um welche beiden Sendestrahlen 28 aus der Sequenz 46 es sich handelt. Der Empfängersteuereinheit ist dazu lediglich bekannt, an welchem Sender/Empfängerpaar 22', 26' die Sequenz 46 gewöhnlich beginnt und wie die Sequenz 46 definiert ist, also in welcher Reihenfolge Senderstrahlen 28 und Synchronisationssendestrahlen 29 in einem Zyklus T aufeinanderfolgen, also beispielsweise AABBABBBBABA.

Die Empfängersteuereinheit kann daraus folglich ableiten, welcher Sender 22 als nächstes in der Sequenz 46 aktiviert wird und mit der zyklischen Abfrage der einzelnen Empfänger 26 beginnen. Gleichzeitig wird von der Empfängersteuereinheit 32 die Objekterkennung aktiviert, so dass das Lichtgitter 10 seine eigentliche Aufgabe wahrnehmen kann.

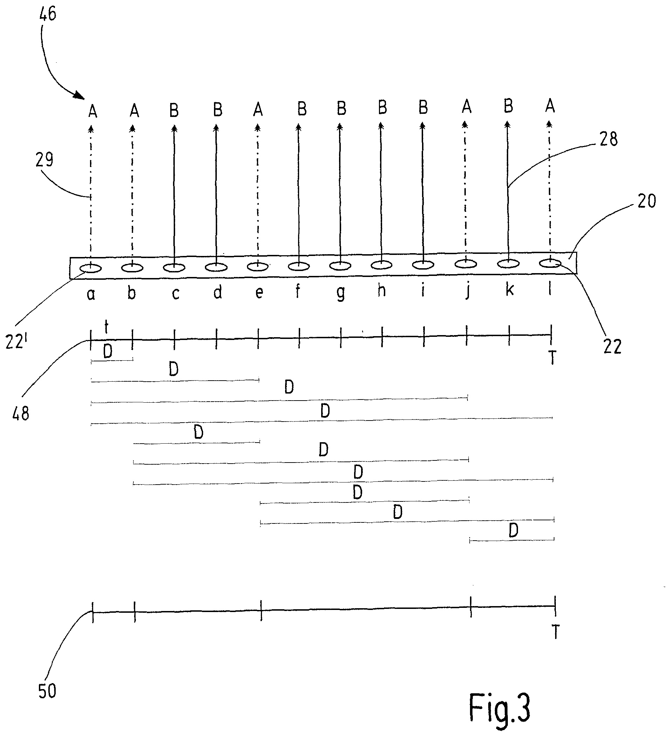

Wie die Sequenz 46 nach dem erfindungsgemäßen Verfahren zu wählen ist, wird anhand der Fig. 3 näher erläutert. Die Sequenz 46 wird hier vorteilhaft so gewählt, dass ein eindeutiges Zuordnen der mindestens zwei empfangenen Synchronisationssendestrahlen 29 auch dann erfolgen kann, wenn die Sequenz 46 in einem Zyklus T nicht vollständig empfangen wurde, d.h., einige Sendestrahlen 28 beispielsweise durch Blanking ausgeblendet sind.

Fig. 3 zeigt dazu die Sendeeinheit 20 mit den Sendestrahlen 28 gemäß dem Ausführungsbeispiel der Fig. 2.

Unterhalb der Sendeeinheit 20 ist mit der Bezugsziffer 48 ein Zeitstrahl angedeutet, auf dem der Zyklus T aufgetragen ist. Der Zeitstrahl 48 ist entsprechend der Anzahl der Sender 22 der Sendeeinheit 20 in gleichmäßige Abschnitte t unterteilt. Die Markierungen auf dem Zeitstrahl 48 entsprechen den Zeitpunkten, an denen jeweils ein Sender 22 einen Sendestrahl 28 aussendet.

Beginnend mit dem Sender 22', der am äußersten Ende angeordnet ist, werden sequenziell die Sender 22 nacheinander aktiviert. Anhand der der Bezugszeichen a bis l ist die jeweilige Position eines Sender/Empfängerpaares angegeben. Da die Ansteuerung sequenziell erfolgt entspricht die Zuordnung a bis l auch der zeitlichen Reihenfolge, in der die Sendestrahlen im Zyklus T ausgesandt werden. Die Sendestrahlen an den Position a, b, e, j und l sind Synchronisationssendestrahlen 29 und jeweils mit einer Kennung A belegt. Die anderen Sendestrahlen 28 tragen entweder keine oder eine zu A unterschiedliche Kennung B. Die vollständige Sequenz 46 über den Zyklus T entspricht hier folglich dem Muster AABBABBBBABA, wobei der zeitliche Abstand zwischen den einzelnen Sendestrahlen 28 dem Abstand t entspricht.

Unterhalb des Zeitstrahls 48 sind die einzelnen zeitlichen Abstände D, die paarweise zwischen den Synchronisationssendestrahlen 29 auftreten, dargestellt. Die Abstände sind jeweils ein Vielfaches des Abstands t. Die Reihenfolge, in der die Synchronisationssendestrahlen ausgesandt werden, ist so gewählt, dass der zeitliche Abstand D eindeutig ist, d.h., dass im Zyklus T ein zeitlicher Abstand D zwischen zwei Synchronisationssendestrahlen nur genau einmal vorkommen kann. Beispielsweise entspricht der zeitliche Abstand D zwischen dem Aussenden des Synchronisationssendestrahls 29 an Position b und dem Aussenden des Synchronisationssendestrahls 29 an Position e vier Zeiteinheiten mit der Dauer t. Im Zyklus T gibt es keine weiteren zwei Paare von Synchronisationssendestrahlen 29, deren Aussende-Zeitpunkte mit einem zeitlichen Abstand 4t versetzt sind. Empfängt somit die Empfangseinheit (hier nicht dargestellt) einen ersten Synchronisationssendestrahl 29 und einen zweiten Synchronisationssendestrahl 29 in einem zeitlichen Abstand 4t, handelt es sich eindeutig um die Synchronisationssendestrahl 29 der Positionen b und e.

Da die Sendersteuereinheit 44 die Sender/Empfängerpaare sequentiell ansteuert, folgt daraus, dass im nächsten Intervallschritt der Sendestrahl an Position f gesendet wird. Die Empfangseinheit 24 kann somit beginnend mit dem Sender/Empfängerpaar 22, 26 an der Position f mit der zyklischen Auswertung beginnen und die Objekterkennung aktivieren.

Voraussetzung für die Synchronisation ist somit lediglich, dass die Empfangseinheit 24 in einem Zyklus T mindestens zwei Synchronisationssendestrahlen 29 empfängt. Dabei ist es nicht von Bedeutung, dass zwischen den zwei Synchronisationssendestrahlen 29 weitere Synchronisationssendestrahlen 29 vorhanden sind, die aber beispielsweise aufgrund von Blanking ausgeblendet sind, da lediglich die zeitliche Differenz zwischen dem Empfangs-Zeitpunkten der Synchronisationssendestrahlen 29 relevant ist. Somit ist es auch möglich, Synchronisationssendestrahlen 29 in der Sequenz 46, beispielsweise fürs Blanking, bewusst auszublenden. Wäre also beim vorherigen Beispiel der Sendestrahl an Position e verdeckt, hätte die Empfangseinheit 24 voraussichtlich erst wieder den Sendestrahl an Position j als nächsten Synchronisationssendestrahl 29 erkannt. Die zeitliche Differenz beträgt in diesem Fall 8t. Ein derartiger Abstand kann nach der Definition jedoch nur zwischen den Sendestrahlen an Position b und j auftreten. Die Empfangseinheit 24 kann somit wiederum erkennen, um welchen Synchronisationssendestrahl 29 der Sequenz 46 es sich handelt.

Es versteht sich, dass das in Fig. 3 gezeigte Lichtgitter 10 um weitere Sender/Empfängerpaare 22, 26 erweiterbar ist, wodurch sich auch der Zyklus T verlängert. Relevant für die Synchronisation nach den neuen Verfahren ist lediglich, dass die zeitlichen Abstände zwischen den Synchronisationssendestrahlen 29 in einem Zyklus eindeutig ist.

Je mehr Synchronisationssendestrahlen 29 in einem Zyklus T verwendet werden, umso größer ist die Wahrscheinlichkeit einer schnellen Synchronisation des Lichtgitters 10 und umso höher ist die Verfügbarkeit des Lichtgitters 10. Eine maximale Anzahl M an Synchronisationssendestrahlen ist jedoch durch die Gesamtanzahl N der Sender/Empfängerpaare begrenzt, d.h., bei einer bestimmten Anzahl an Sender/Empfängerpaaren gibt es eine maximale Anzahl M an Synchronisationssendestrahlen 29, die so über den Zyklus T verteilt werden können, dass der zeitliche Abstand D zwischen den Synchronisationssendestrahlen 29 eindeutig ist.

Um die maximale Anzahl M an Synchronisationssendestrahlen zu ermitteln, ist in der Fig. 3 ein weiterer Zeitstrahl 50 der Länge T dargestellt. Auf diesen Zeitstrahl 50 sind nur die Markierungen vom ersten Zeitstrahl 48 übertragen, an den ein Synchronisationssendestrahl 29 ausgesandt wird. Der dargestellte Zeitstrahl 50 entspricht einem sogenannten Golomb-Maßstab, einem Maßstab, bei dem es keine zwei Markierungen an ganzzahligen Positionen mit dem gleichen Abstand zueinander gibt.

Golomb-Maßstäbe werden anhand ihrer Ordnung und ihrer Länge kategorisiert. Die Ordnung eines Golomb-Maßstabs ist dabei definiert durch die Anzahl der Markierungen, die Länge durch den größten Abstand zweier Markierungen. Übertragen auf das Lichtgitter 10 entspricht die Anzahl der Markierungen der Anzahl M der Synchronisationssendestrahlen 29 und die Länge dem Zyklus T. Die ganzzahligen Positionen entsprechen den einzelnen Sende-Zeitpunkten (a bis I).

Es ist nicht erforderlich, dass ein Golomb-Maßstab 50 alle Abstände bis zu seiner Länge messen kann, dass also alle Abstände zwischen allen Markierungen - aufsteigend geordnet - eine lückenlose Zahlenreihe ergeben. Ferner wird ein Golomb-Maßstab 50 als optimal bezeichnet, wenn es keine kürzeren Maßstäbe derselben Ordnung gibt. Bezogen auf das Lichtgitter 10 bedeutet dies, dass die maximale Anzahl M an Synchronisationssendestrahlen 29 aus der Berechnung von optimalen Golomb-Maßstäben bestimmt werden kann. Im Umkehrschluss ist für eine bestimmte Anzahl M von Synchronisationssendestrahlen 29 eine bestimmte Anzahl $N_{min}$ von Sender/Empfängerpaaren 22, 26 nötig.

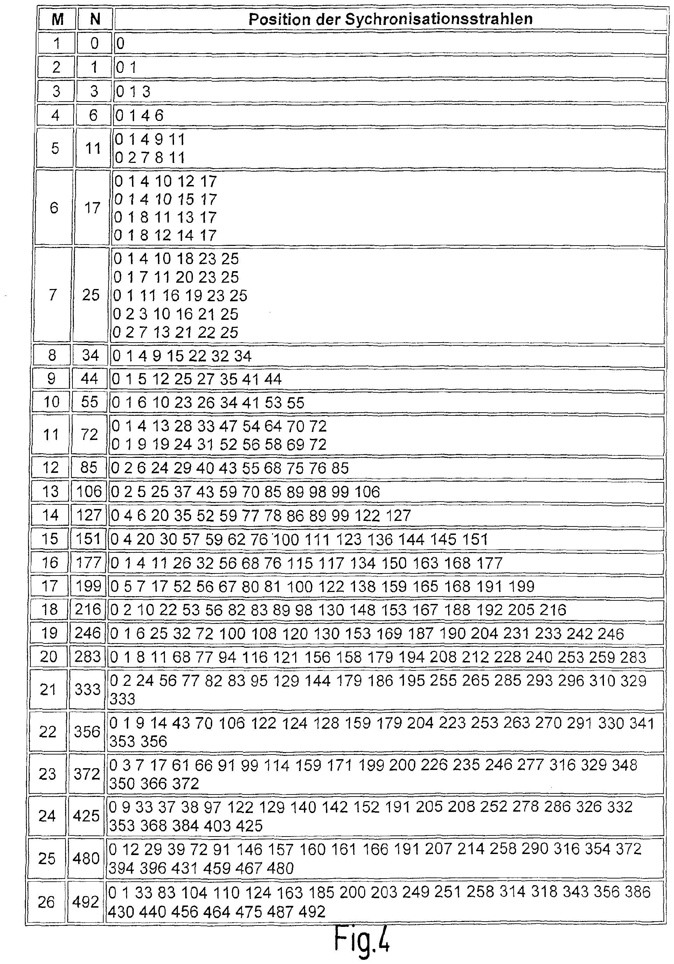

Fig. 4 zeigt in einer Tabelle mögliche Werte für die maximale Anzahl M an Synchronisationssendestrahlen 29 und die zugehörige minimale Anzahl $N_{min}$ an Sender/Empfängerpaaren 22, 26. Die Werte in der dritten Spalte zeigen beispielhaft, wie die Synchronisationssendestrahlen 29 innerhalb einer Sequenz 46 angeordnet werden können.

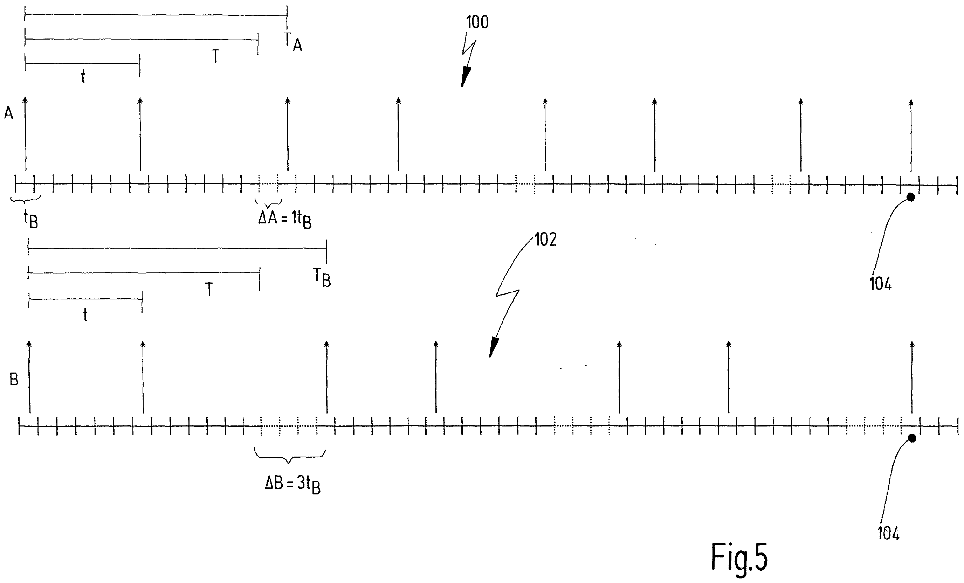

Bezugnehmend auf die Fig. 5 wird im Folgenden näher erläutert wie zwei der zuvor beschriebenen Lichtgitter in unmittelbarer Nähe zueinander betrieben werden können, ohne dass sich die Lichtgitter gegenseitig stören oder beeinflussen. Das im Folgenden beschriebene Vorgehen ist besonders bevorzugt in Verbindung mit den erfindungsgemäßen Lichtgittern zu verwenden, kann darüberhinaus jedoch auch für andere Lichtgitter verwendet werden. Es handelt sich somit um eine eigenständige Idee, um Störungen zwischen zwei benachbarten Lichtgittern zu vermeiden, ohne dass die einzelnen Sendestrahlen zu diesem Zweck gesondert kodiert werden müssen.

Erreicht wird dies durch die Variation der Zykluslängen T der einzelnen Lichtgitter. Der Zyklus T ist bei Lichtgittern von der Anzahl der Sendestrahlen abhängig, so dass kürzere Lichtgitter mit wenig Sendestrahlen einen kürzeren Zyklus haben als längere Lichtgitter. Werden ein langes und ein kurzes Lichtgitter nahe bei einander verwendet, kann in einem bestimmten Bereich das große Lichtgitter durch das häufiger sendende kurze Lichtgitter gestört werden.

Zur Verringerung dieser Störung wird bei Lichtgittern mit ungleicher Länge zunächst der Zyklus mindestens eines Lichtgitters so manipuliert, dass die Zyklen der benachbarten Lichtgitter gleich lang sind. Der Zyklus wird folglich unabhängig von der Lichtgitterlänge gemacht. Durch Anpassen der Sendezyklen wird erreicht, dass die Sendezeitpunkte, an denen das kurze Lichtgitter Sendestrahlen 28 aussendet, nur selten oder besonders bevorzugt gar nicht mit den Sendezeitpunkten des langen Lichtgitters zusammenfallen und so ein Übersprechen zwischen den Lichtgittern vermindert wird.

Sind die Zyklen der benachbarten Lichtgitter gleich lang, kann für eine weitere Verbesserung der Störempfindlichkeit der Zyklus eines oder beider Lichtgitter wiederum durch unterschiedliche Offsets geändert werden, d.h. die Zykluslänge zwischen den Lichtgittern wird bewusst zueinander versetzt. Durch den gezielten Versatz kann, wie in Fig. 5 näher erläutert, ein Überlappen weiter vermindert oder auch ausgeschlossen werden.

In der Fig. 5 sind die Sendezeitpunkte, an denen ein erstes Lichtgitter A und ein zweites Lichtgitter B Sendestrahlen aussenden, durch zwei synchrone Zeitstrahlen 100, 102 dargestellt, die jeweils in gleichmäßige Grundintervalle $t_B$ unterteilt sind. Auf dem ersten Zeitstrahl 100 sind die Sendezeitpunkte der Sendestrahlen 28 des ersten Lichtgitters A und auf dem zweiten Zeitstrahl 102 die Sendezeitpunkte der Sendestrahlen 28 des zweiten Lichtgitters B gezeigt. Beide Lichtgitter A und B senden hier in einem Zyklus T beispielhaft jeweils zwei Sendestrahlen aus, die in einem zeitlichen Abstand t zueinander versetzt sind. Der zeitliche Abstand t entspricht einem Vielfachen $N_F$ des Grundintervalls $t_B$. Im hier gezeigten Beispiel ist $N_F$ gleich 6.

$$t = N_F \cdot t_B$$

Es ist von Vorteil, wenn die Sendezeitpunkte der beiden Lichtgitter A und B versetzt zueinander sind, damit sich die Lichtgitter A und B nicht gegenseitig beeinflussen. Dies ist besonders von Interesse, wenn die Lichtgitter A und B nahe beieinander montiert sind. Damit die Sendezeitpunkte der beiden Lichtgitter asynchron zueinander versetzt sind, wird der Zyklus T der beiden Lichtgitter jeweils um einen Offset ∆A bzw. ∆B in Form einer Pause erweitert. Der Zyklus $T_A$ des ersten Lichtgitters A ist somit der Zyklus T erweitert um den Offset ∆A und der Zyklus $T_B$ des zweiten Lichtgitters entspricht dem Zyklus T erweitert um den Offset ∆B.

$$T_A = T + \Delta A$$

$$T_B = T + \Delta B$$

Die Offsets (∆A, ∆B) entsprechen hier ebenfalls einem ganzzahligen Vielfachen ($N_{\Delta A}$, $N_{\Delta B}$) des Grundintervalls $t_B$.

$$\Delta A = N_{\Delta A} \cdot t_B$$

$$\Delta B = N_{\Delta B} \cdot t_B$$

Damit es zu einem Versatz zwischen den beiden Lichtgittern kommt, die Lichtgitter also nicht zeitsynchron senden, müssen die Offsets (∆A, ∆B) voneinander verschieden sein. Weiterhin sollte der Versatz durch die Offsets (|∆A- ∆B|) ungleich und vorzugsweise kleiner als der zeitliche Abstand zwischen zwei benachbarten Sendestrahlen 28 sein. Zusätzlich muss der Versatz mindestens größer als das Zweifache des Grundabstandes $t_B$ sein, damit die Strahlen nicht zwangsläufig in späteren Durchläufen aufeinander fallen. Es ist daher von Vorteil, wenn folgende Beziehungen gelten:

$$\Delta A \neq \Delta B$$

$$2t_B \leq \left| \Delta A - \Delta B \right| \leq (N_F - 2) \cdot t_B$$

Der Versatz tritt bei jedem Durchlauf des Zyklus auf, d.h. die Zyklen T der beiden Lichtgitter werden mit jeden Durchlauf um |∆A - ∆B| zueinander versetzt. Zu einer Kollision104 von Sendestrahlen, d.h. einem zeitgleichen Senden, kommt es dabei in dem Durchlauf, in dem die Zyklen so zueinander versetzt sind, dass die Summe der Versatzstücke gleich einem Abstand zwischen den Sendestrahlen entspricht. Ein Abstand zwischen den Sendestrahlen ist zum einen der Abstand t und zum anderen der Abstand der Sendestrahlen zwischen den Zyklen bedingt durch die Offsets ∆A und ∆B.

Durch geeignete Wahl der Offsets ∆A, ∆B und dem Abstand t, also den ganzzahligen Parameter $N_{\Delta A}$, $N_{\Delta A}$ und $N_F$, kann bestimmt werden, in welchen Durchlauf eine Kollision auftritt. In bevorzugten Realisierungen lässt sich somit einstellen, dass eine zeitliche Überlappung von Sendestrahlen zweier Lichtgitter je nach Implementierung höchstens bei einer bestimmten Anzahl von Signalumläufen stattfindet. Bei ungenauen Taktgebern ist diese Wahrscheinlichkeit meist viel niedriger, jedoch kann mit diesem Vorgehen eine sichere obere Grenze für die mögliche Anzahl von Überlappungen bei hochwertigen Taktgebern angegeben werden.

Bei dem Beispiel aus Fig. 5 kann eine Kollision nach dem dritten Durchlauf stattfinden, d.h. nach dem dritten Durchlauf entspricht der aufsummierte Versatz |∆A - ∆B| dem Abstand t zwischen den Sendestrahlen. Mit ∆A gleich $1t_B$ und ∆B gleich $3t_B$ ist der Versatz gleich $2t_B$ und entspricht bei der dritten Wiederholung $6 t_B$ somit dem Abstand von $6 t_B$ zweier Sendestrahlen..

Wie bereits zuvor erwähnt, ist das Kodieren zweier Lichtgitter nach dem genannten Vorgehen nicht nur für Lichtgitter anwendbar, deren Synchronisation nach dem erfindungsgemäßen Verfahren vollzogen wird, sondern auch für Lichtgitter mit alternativer Synchronisation. Bei der Synchronisation nach dem erfindungsgemäßen Verfahren kann neben der genannten Kodierung der Lichtgitter auch alternativ eine Kodierung derart erfolgen, dass die zu kodierenden Lichtgitter unterschiedliche Bereiche eines gemeinsamen Golomb-Maßstabs verwenden.

**Patentansprüche**

1. Verfahren zur Synchronisation eines Lichtgitters (10), das eine Sendeeinheit (20) mit einer Vielzahl von Sendern (22), eine Empfangseinheit (24) mit einer Vielzahl von Empfängern (26), eine Sendersteuereinheit (44), und eine Empfängersteuereinheit (32) aufweist,
   wobei jeder Sender (22) mit einem zughörigen Empfänger (26) ein Sender/Empfängerpaar bildet und ein Sender (22) zum zugehörigen Empfänger (26) einen Sendestrahl (28) sendet, wenn der Sender aktiviert wird,
   **gekennzeichnet dadurch, dass**
   die Empfängersteuereinheit zunächst alle Empfänger (26) aktiviert und die Sendersteuereinheit alle Sender (22) in einem Zyklus (T) nacheinander mit einem festen Takt mit gleichmäßigem Intervallabstand einmal aktiviert, wobei mindestens zwei Sendestrahlen (28) im Zyklus (T) einen ersten und einen zweiten Synchronisationssendestrahl (29) bilden, die in einem definierten zeitlichen Abstand (D) zueinander ausgesendet werden und eine gemeinsame Kennung aufweisen, durch die sie sich von den anderen Sendestrahlen (28) unterscheiden,
   wobei der erste und der zweite Synchronisationssendestrahl (29) und die Sendestrahlen (28) in einer Reihenfolge ausgesandt werden, die eine definierte Sequenz (46) bildet, welche der Sendersteuereinheit und der Empfängersteuereinheit bekannt ist, und der definierte zeitliche Abstand (D) zwischen zwei Synchronisationssendestrahlen (29) im Zyklus (T) eindeutig ist, so dass im Zyklus (T) ein definierter zeitlicher Abstand (D) zwischen zwei Synchronisationssendestrahlen nur genau einmal vorkommt, und

wobei die Empfängersteuereinheit (32) die zeitliche Differenz zwischen dem Eintreffen des ersten und des zweiten Synchronisationssendestrahls (29) bestimmt und anhand des definierten zeitlichen Abstands (D) den ersten und den zweiten Synchronisationssendestrahl (29) eindeutig innerhalb der Gesamtheit der Sendestrahlen (28) im Zyklus (T) zuordnet.

**2.** Verfahren nach Anspruch 1, wobei die Anzahl (M) an Synchronisationssendestrahlen (29) so gewählt ist, dass bei einer Anzahl (N) an Sendern (22) keine größere Anzahl (M) an Synchronisationssendestrahlen (29) gefunden werden kann, an den der paarweise zeitliche Abstand zwischen den Synchronisationssendestrahlen (29) eindeutig ist.

**3.** Verfahren nach einem der Ansprüche 1 oder 2, wobei die Empfängersteuereinheit (32) den gemessenen zeitlichen Abstand mit Sollwerten vergleicht und in Abhängigkeit davon das Lichtgitter (10) in einen Objekterkennungsbetrieb versetzt.

**4.** Verfahren nach Anspruch 3, wobei der Objekterkennungsbetrieb mit dem Sendestrahl (28) beginnt, der auf den zweiten Synchronisationssendestrahl (29) im Zyklus (T) folgt.

**5.** Verfahren nach einem der Ansprüche 3 oder 4, wobei im Objekterkennungsbetrieb die Empfängersteuereinheit (32) ein Objekterkennungssignal erzeugt, wenn einer der Sendestrahlen (28) unterbrochen wird.

**6.** Lichtgitter mit einer Sendeeinheit (20) mit einer Vielzahl von Sendern (22), mit einer Empfangseinheit (24) mit einer Vielzahl von Empfängern (26), mit einer Sendersteuereinheit (44) und mit einer Empfängersteuereinheit (32), wobei jeder Sender (22) mit einem zughörigen Empfänger (26) ein Sender/Empfängerpaar bildet und ein Sender (22) einen Sendestrahl (28) zu dem jeweils zugeordneten Empfänger (26) sendet, wenn der Sender dieser aktiviert wird, **gekennzeichnet dadurch, dass** die Empfängersteuereinheit (32) dazu ausgebildet ist, zunächst alle Empfänger 26 zu aktivieren und die Sendersteuereinheit (44) dazu ausgebildet ist, alle Sender (22) in einem Zyklus (T) nacheinander mit einem festen Takt mit gleichmäßigem Intervallabstand einmal zu aktivieren, wobei mindestens zwei Sendestrahlen (28) im Zyklus (T) einen ersten und einen zweiten Synchronisationssendestrahl (29) bilden, die in einem definierten zeitlichen Abstand (D) zueinander ausgesendet werden und eine gemeinsame Kennung aufweisen, durch die sie sich von den anderen Sendestrahlen (28) unterscheiden, wobei der erste und der zweite Synchronisationssendestrahl (29) und die Sendestrahlen (28) in einer Reihenfolge ausgesandt werden, die eine definierte Sequenz (46) bildet, welche der Sendersteuereinheit und der Empfängersteuereinheit bekannt ist, und der definierte zeitliche Abstand (D) zwischen zwei Synchronisationssendestrahlen (29) im Zyklus (T) eindeutig ist, so dass im Zyklus (T) ein definierter zeitlicher Abstand (D) zwischen zwei Synchronisationssendestrahlen nur genau einmal vorkommt, und

wobei die Empfängersteuereinheit dazu ausgebildet ist, die zeitliche Differenz zwischen dem Eintreffen des ersten und des zweiten Synchronisationssendestrahls (29) zu bestimmen und anhand des definierten zeitlichen Abstands (D) den ersten und den zweiten Synchronisationssendestrahl (29) eindeutig innerhalb J Z der Gesamtheit der Sendestrahlen (28) im Zyklus J Z zuzuordnen.

## Claims

**1.** A method for synchronizing a light grid (10) having a transmitter unit (20) with a plurality of transmitters (22), a receiver unit (24) with a plurality of receivers (26), a transmitter control unit (44), and a receiver control unit (32), wherein each transmitter (22) forms a transmitter/receiver pair with an associated receiver (26) and a transmitter (22) transmits a transmission beam (28) to the associated receiver (26) when the transmitter is activated,
**characterized in that**
the receiver control unit first activates all receivers (26) and the transmitter control unit activates one after the other all transmitters (22) once in a cycle (T) with a steady cycle having uniform interval spacing,
wherein at least two transmission beams (28) in the cycle (T) form a first and a second synchronization transmission beam (29) which are transmitted at a defined time interval (D) from one another and have a common identifier by which they are distinguished from the other transmission beams (28), wherein the first synchronization transmission beam, the second synchronization transmission beam (29), and the transmission beams (28) are transmitted in an order which forms a defined sequence (46) which is known to the transmitter control unit and the receiver control unit, and the defined time interval (D) between two synchronization transmission beams (29) in the cycle (T) is unique, so that in the cycle (T) a defined time interval (D) between two synchronization transmission beams occurs only once, and wherein the receiver control unit (32) determines the time difference between the arrival of the first second synchronization transmission beam and the second synchronization transmission beam (29) and, on the basis of the defined distance (D), unambiguously allocates the first synchronization transmission beam and the second synchronization transmission beam (29) within the totality of the transmission beams (28) in the cycle (T).

2. The method according to claim 1, wherein the number (M) of synchronization transmission beams (29) is selected such that, given a number (N) of transmitters (22), no larger number (M) of synchronization transmit beams (29) can be found to which the pairwise temporal distance between the synchronization transmission beams (29) is unique.

3. The method according to any one of claims 1 or 2, wherein the receiver control unit (32) compares the measured temporal distance with expected values and, based thereupon, sets the light grid (10) in an object detection mode.

4. The method according to claim 3, wherein the object detection mode starts with the transmission beam (28) following the second synchronization transmission beam (29) in the cycle (T).

5. The method according to any one of claims 3 or 4, wherein in the object detection mode the receiver control unit (32) generates an object detection signal when one of the transmission beams (28) is interrupted.

6. A light grid comprising a transmitter unit (20) having a plurality of transmitters (22), a receiver unit (24) having a plurality of receivers (26), a transmitter control unit (44) and a receiver control unit (32), wherein each transmitter (22) forms a transmitter/receiver pair with an associated receiver (26) and a transmitter (22) transmits a transmission beam (28) to the associated receiver (26) when the transmitter is activated, **characterized in that** the receiver control unit (32) is configured to first activate all receivers 26 and the transmitter control unit (44) is configured to activate all transmitters (22) once in a cycle (T) one after the other with a steady cycle having uniform interval spacing, wherein at least two transmission beams (28) in the cycle (T) form a first synchronization transmission beam and a second synchronization transmission beam (29) which are transmitted at a defined time interval (D) from one another and have a common identifier by which they are distinguished from the other transmission beams (28), wherein the first synchronization transmission beam, the second synchronization transmit beam (29), and the transmission beam (28) are transmitted in an order which forms a defined sequence (46) which is known to the transmitter control unit and the receiver control unit, and the defined time interval (D) between two synchronization transmission beams (29) in the cycle (T) is unique, so that in the cycle (T) a defined time interval (D) between two synchronization transmission beams occurs only once, and wherein the receiver control unit is configured to determine the time difference between the arrival of the first synchronization transmission beam and the second synchronization transmission beam (29) and to uniquely allocate the first synchronization transmission beam and the second synchronization transmission beam (29) within the totality of the transmission beams (28) in the cycle (T) based on the defined time difference (D).

## Revendications

1. Procédé de synchronisation d'une barrière lumineuse (10), qui possède une unité d'émission (20) comprenant une pluralité d'émetteurs (22), une unité de réception (24) comprenant une pluralité de récepteurs (26), une unité de commande d'émetteur (44) et une unité de commande de récepteur (32), chaque émetteur (22) formant, avec un récepteur (26) associé, une paire émetteur/récepteur et un émetteur (22) envoyant un rayon d'émission (28) vers le récepteur (26) associé lorsque l'émetteur est activé, **caractérisé en ce que** l'unité de commande de récepteur active tout d'abord tous les récepteurs (26) et l'unité de commande d'émetteur active tous les émetteurs (22) une fois l'un après l'autre dans un cycle (T) avec une fréquence d'horloge fixe à un intervalle régulier, au moins deux rayons d'émission (28) dans un cycle (T) formant un premier et un deuxième rayon d'émission de synchronisation (29), qui sont émis à un intervalle de temps (D) défini l'un de l'autre et possèdent une identification commune par laquelle ils se distinguent des autres rayons d'émission (28), le premier et le deuxième rayon d'émission de synchronisation (29) ainsi que les rayons d'émission (28) étant émis dans un ordre qui forme une séquence (46) définie, laquelle est connue de l'unité de commande d'émetteur et de l'unité de commande de récepteur, et l'intervalle de temps (D) défini entre deux rayons d'émission de synchronisation (29) dans le cycle (T) étant univoque, de sorte qu'un intervalle de temps (D) défini entre deux rayons d'émission de synchronisation ne se produit qu'exactement une fois dans le cycle (T), et

l'unité de commande de récepteur (32) déterminant la différence dans le temps entre l'arrivée du premier et du deuxième rayon d'émission de synchronisation (29) et, à l'aide de l'intervalle de temps (D) défini, associant le premier et le deuxième rayon d'émission de synchronisation (29) univoquement au sein de l'ensemble des rayons d'émission (28) dans le cycle (T).

2. Procédé selon la revendication 1, le nombre (M) de rayons d'émission de synchronisation (29) étant choisi de telle sorte qu'avec un nombre (N) d'émetteurs (22), il n'est pas possible de trouver un nombre (M) de rayons d'émission de synchronisation (29) plus grand au niveau desquels l'intervalle de temps par paire entre les rayons d'émission de synchronisation (29) est univoque.

3. Procédé selon l'une des revendications 1 ou 2, l'unité de commande de récepteur (32) comparant l'intervalle de temps mesuré avec des valeurs de consigne et, en fonction du résultat, plaçant la barrière lumineuse (10) dans un mode de reconnaissance d'objet.

4. Procédé selon la revendication 3, le mode de reconnaissance d'objet commençant avec le rayon d'émission (28) qui suit le deuxième rayon d'émission de synchronisation (29) dans le cycle (T).

5. Procédé selon l'une des revendications 3 ou 4, en mode de reconnaissance d'objet, l'unité de commande de récepteur (32) générant un signal de reconnaissance d'objet lorsque l'un des rayons d'émission (28) est interrompu.

6. Barrière lumineuse pourvue d'une unité d'émission (20) comprenant une pluralité d'émetteurs (22), d'une unité de réception (24) comprenant une pluralité de récepteurs (26), d'une unité de commande d'émetteur (44) et d'une unité de commande de récepteur (32),

   chaque émetteur (22) formant, avec un récepteur (26) associé, une paire émetteur/récepteur et un émetteur (22) envoyant un rayon d'émission (28) vers le récepteur (26) respectivement associé lorsque l'émetteur est activé,

   **caractérisée en ce que** l'unité de commande de récepteur (32) est configurée pour activer tout d'abord tous les récepteurs (26) et l'unité de commande d'émetteur (44) est configurée pour activer tous les émetteurs (22) une fois l'un après l'autre dans un cycle (T) avec une fréquence d'horloge fixe à un intervalle régulier,

   au moins deux rayons d'émission (28) dans un cycle (T) formant un premier et un deuxième rayon d'émission de synchronisation (29), qui sont émis à un intervalle de temps (D) défini l'un de l'autre et possèdent une identification commune par laquelle ils se distinguent des autres rayons d'émission (28),

   le premier et le deuxième rayon d'émission de synchronisation (29) ainsi que les rayons d'émission (28) étant émis dans un ordre qui forme une séquence (46) définie, laquelle est connue de l'unité de commande d'émetteur et de l'unité de commande de récepteur, et l'intervalle de temps (D) défini entre deux rayons d'émission de synchronisation (29) dans le cycle (T) étant univoque, de sorte qu'un intervalle de temps (D) défini entre deux rayons d'émission de synchronisation ne se produit qu'exactement une fois dans le cycle (T), et

   l'unité de commande de récepteur étant configurée pour déterminer la différence dans le temps entre l'arrivée du premier et du deuxième rayon d'émission de synchronisation (29) et, à l'aide de l'intervalle de temps (D) défini, associer le premier et le deuxième rayon d'émission de synchronisation (29) univoquement au sein de l'ensemble des rayons d'émission (28) dans le cycle (T).

Fig.1

Fig.2

Fig.3

| M | N | Position der Sychronisationsstrahlen |
|---|---|---|
| 1 | 0 | 0 |
| 2 | 1 | 0 1 |
| 3 | 3 | 0 1 3 |
| 4 | 6 | 0 1 4 6 |
| 5 | 11 | 0 1 4 9 11<br>0 2 7 8 11 |
| 6 | 17 | 0 1 4 10 12 17<br>0 1 4 10 15 17<br>0 1 8 11 13 17<br>0 1 8 12 14 17 |
| 7 | 25 | 0 1 4 10 18 23 25<br>0 1 7 11 20 23 25<br>0 1 11 16 19 23 25<br>0 2 3 10 16 21 25<br>0 2 7 13 21 22 25 |
| 8 | 34 | 0 1 4 9 15 22 32 34 |
| 9 | 44 | 0 1 5 12 25 27 35 41 44 |
| 10 | 55 | 0 1 6 10 23 26 34 41 53 55 |
| 11 | 72 | 0 1 4 13 28 33 47 54 64 70 72<br>0 1 9 19 24 31 52 56 58 69 72 |
| 12 | 85 | 0 2 6 24 29 40 43 55 68 75 76 85 |
| 13 | 106 | 0 2 5 25 37 43 59 70 85 89 98 99 106 |
| 14 | 127 | 0 4 6 20 35 52 59 77 78 86 89 99 122 127 |
| 15 | 151 | 0 4 20 30 57 59 62 76 100 111 123 136 144 145 151 |
| 16 | 177 | 0 1 4 11 26 32 56 68 76 115 117 134 150 163 168 177 |
| 17 | 199 | 0 5 7 17 52 56 67 80 81 100 122 138 159 165 168 191 199 |
| 18 | 216 | 0 2 10 22 53 56 82 83 89 98 130 148 153 167 188 192 205 216 |
| 19 | 246 | 0 1 6 25 32 72 100 108 120 130 153 169 187 190 204 231 233 242 246 |
| 20 | 283 | 0 1 8 11 68 77 94 116 121 156 158 179 194 208 212 228 240 253 259 283 |
| 21 | 333 | 0 2 24 56 77 82 83 95 129 144 179 186 195 255 265 285 293 296 310 329 333 |
| 22 | 356 | 0 1 9 14 43 70 106 122 124 128 159 179 204 223 253 263 270 291 330 341 353 356 |
| 23 | 372 | 0 3 7 17 61 66 91 99 114 159 171 199 200 226 235 246 277 316 329 348 350 366 372 |
| 24 | 425 | 0 9 33 37 38 97 122 129 140 142 152 191 205 208 252 278 286 326 332 353 368 384 403 425 |
| 25 | 480 | 0 12 29 39 72 91 146 157 160 161 166 191 207 214 258 290 316 354 372 394 396 431 459 467 480 |
| 26 | 492 | 0 1 33 83 104 110 124 163 185 200 203 249 251 258 314 318 343 356 386 430 440 456 464 475 487 492 |

Fig.4

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19510304 C1
- DE 102005047776 B4
- DE 102007059565 B4
- EP 1790999 B1